Europäisches Patentamt

European Patent Office

Office européen des brevets

(19)

(11) Publication number: **0 322 176**

**A2**

(12) # EUROPEAN PATENT APPLICATION

(21) Application number: 88312020.6

(22) Date of filing: **19.12.88**

(51) Int. Cl.⁴: **G01K 13/06 , G01K 1/16**

(30) Priority: **23.12.87 GB 8730067**

(43) Date of publication of application:
**28.06.89 Bulletin 89/26**

(84) Designated Contracting States:
**AT BE CH DE ES FR GB GR IT LI LU NL SE**

(71) Applicant: **BNF Metals Technology Centre Grove Laboratories Denchworth Road Wantage Oxfordshire, OX12 9BJ(GB)**

(72) Inventor: **Guyoncourt, David Michael Maurice 14 Shepherd Gardens Abingdon Oxon OX14 5PR(GB)**

(74) Representative: **Brooke-Smith, Fred et al STEVENS, HEWLETT & PERKINS 5 Quality Court Chancery Lane London WC2A 1HZ(GB)**

(54) **Surface-temperature sensing method and apparatus.**

(57) An apparatus suitable for measuring the surface temperature of a moving strip at an elevated temperature comprises a sensing head 10 connected to a pneumatic actuator 23 through a ball joint 22. Air under pressure is supplied to a chamber in the head 10 and flows through a ring of passages 16 to form an air cushion between the sensing head and the surface S whose temperature is to be measured. Part of the air flows inward across the surface S to a central aperture 19 in the bottom plate 17 of the head 18 and its temperature is measured by a thermocouple 21 in the aperture 19. Aperture 19 leads to a cavity 18 above plate 17 and the cavity is vented by passages 20. The temperature recorded by the thermocouple is a measure of the temperature of surface S.

# SURFACE-TEMPERATURE SENSING METHOD AND APPARATUS

This invention relates to a surface-temperature sensing method and apparatus and is more particularly concerned with apparatus for providing a measure of the surface temperature of a workpiece at an elevated temperature by the use of forced convection.

According to the invention there is provided surface-temperature sensing apparatus comprising a sensing head having a surface to face the surface whose temperature is to be measured, means for supporting the sensing head to maintain the said surface thereof a uniform distance away from the surface whose temperature is to be sensed, the sensing head having a port opening to the said face thereof a flow passage or series of flow passages opening to said face and encircling said port, means for producing a pressure difference between said passage or passages and the port, and means for measuring the temperature of air flowing through the port in consequence of said pressure difference.

Said means for supporting the sensing head may be a servo device or a magnetic levitation device, but in preferred arrangements is an air cushion. In one such air cushion arrangement, air under a predetermined pressure is fed to the passage or passages encircling said port, this flow of air serving both to form the air cushion and to produce the inward flow of air across said surface to said port.

Preferably said port opens to a vented cavity formed in the sensing head behind a partition one face of which bounds the cavity and the other face of which constitutes the said face of the sensing head.

The invention also provides a method of sensing the surface temperature of a workpiece at an elevated temperature comprising supporting at a substantially constant distance above said surface a sensing head having a face which is maintained at a substantially constant distance from but closely adjacent said surface, and causing air to flow from a passage or series of passages centred on a post in said face to said port, and sensing the temperature of the air by means of a sensing device disposed in the air flow through said port.

The method and apparatus have a particularly useful application in process controls in the metals industry for the measurement of rolling mill roll temperatures and moving metal strip temperature and in the plastics, rubber, paper and other industries where roll or product temperatures are required to be controlled.

The invention will now be described in more detail with reference by way of example to the accompanying diagrammatic drawing showing a side view of an apparatus according to the invention.

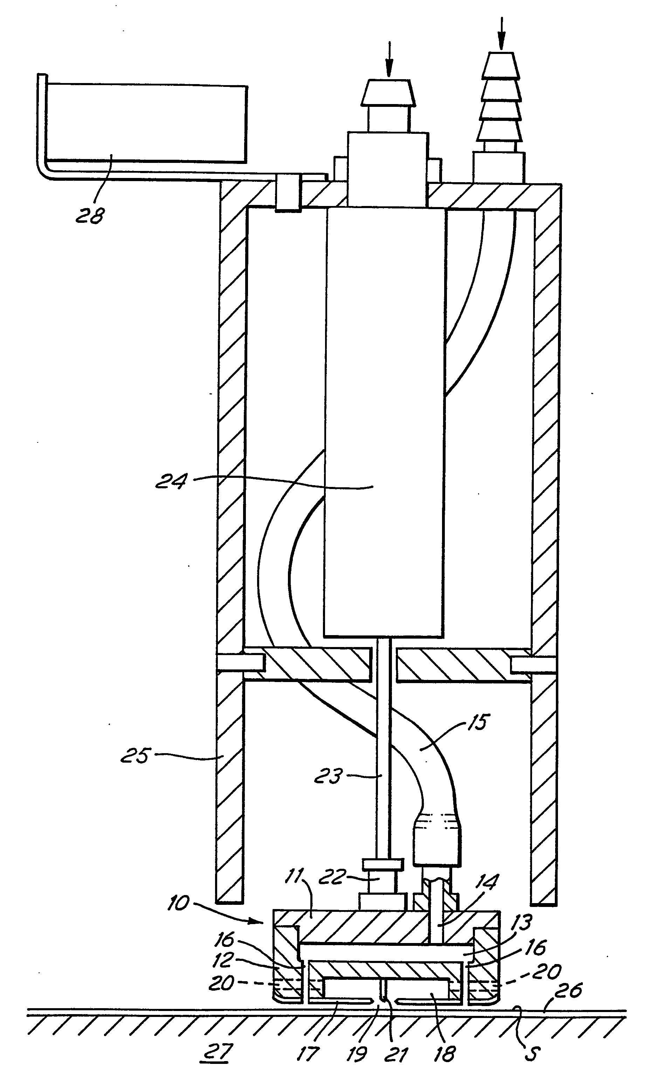

Referring to the drawing, a sensing head 10 is supported above a surface S, whose temperature is to be measured. The sensing head comprises a body portion formed in two parts 11, 12 which are bonded or otherwise secured together and form between them a chamber 13 connected through a passage 14 and a flexible pipe 15 to receive air at a predetermined pressure. From chamber 13 the air flows through a ring of restricted air passages 16 opening to the bottom surface of the sensing head.

The bottom surface of the sensing head is provided by an annular plate 17 which is bonded or otherwise secured to the bottom face of the body part 12. The central part of the plate extends across a cavity 18 formed in the underside of the body part 12, and provides a central port 19. The cavity 18 is vented to atmosphere by way of radial passages 20 extending through the body part 12. A thermocouple 21 is disposed in the cavity 18 directly above the port 18 and senses the temperature of the air flowing from the passages 16, radially inward between the surface S and the plate 17 and through the port into the cavity, to provide a measure of the temperature of surface S.

The sensing head 10 is suspended by a ball joint 22 from the lower end of the piston rod 23 of a double-acting piston and cylinder type of pneumatic activator 24. The actuator piston is of very light weight and may be made of graphite, for example. Air pressure is employed above the piston to press the sensing head lightly towards the surface S. Air pressure may be applied to the underside of the piston to raise the sensing head into a position in which it is protected by a housing 25 in which the actuator 24 is mounted.

The plate 17 is preferably made from a machinable ceramic material which may be sintered if desired. The plate and at least the surfaces of the cavity and venting passages 20 are coated with a high temperature-resistant lacquer or other sealing substance to render the surfaces non-porous so as to prevent any oil or other liquid on the surface of the workpiece from entering the pores of the ceramic material and adversely affecting the response value and/or the response time of the sensing head.

In one application of the apparatus, the surface S is the surface of a metal strip 26 which is moving at a steady speed across a support 27. The emergent air forms an air cushion on which the sensing head floats above the surfaces. The air cushion supports the sensing head at a constant and precise height, say 0.5mm, above the surface S. The constant but yielding downward pressure of the actuator and the ball joint 22 enable the sensing head to tilt and rise, if necessary, to ride over ripples or other distortions in the strip. The supply of air to the underside of the actuator can be actuated to draw the sensing head into the housing 24 quickly to avoid damage to the sensing head in an emergency.

Only a minor proportion of the air flows inward to the central port 19, its temperature being measured by thermocouple 21 which is connected to an appropriate meter via a thermocouple connector 28, the major proportion flowing outward. The surface temperature can be determined by prior calibration of the device or can be estimated from

$$\frac{T_1 - T_0}{T_s - T_0} = 1 - e^{-K}$$

$$\text{where} \quad K = 0.6 \, \frac{HA}{\rho c V}$$

and A = area in mm$^2$ over which heat transfer occurs
V = volume of air flow in litre/min
H heat transfer coefficient in cal/cm$^2$/s/K
$\rho$ average density of the air in g/litre
c average specific heat of air in cal/g
$T_0$ air temperature in degrees Centigrade before contacting the surface
$T_1$ final air temperature in degrees Centigrade
$T_s$ surface temperature being measured, in degrees Centigrade

However, over a substantial range of ambient atmospheric temperatures, the value of $T_0$ has little or no effect on the measured temperatures $T_1$.

In an alternative mode of operating the apparatus, a null heat transfer mode, the temperature of the air supplied to passages 16 is variable, controlled and measured. This temperature $T_0$ is increased until there is a zero temperature difference between $T_0$ he temperature of the air entering and $T_1$ the temperature of the air measured by thermocouple 21. The air temperature is then equal to the temperature of the surface S. The air can conveniently be heated by incorporating a heating element in the chamber 13.

The apparatus can be employed to measure the surface temperature of a moving strip of aluminium, plastics or other material. By appropriately shaping the under surface of the sensing head the apparatus can also be used to measure the temperature of rotating rolls where the roll temperature is required to be controlled.

The apparatus shown in the drawing is advantageous in that there is no contact between the apparatus and the surface where temperature is to be measured and the floating sensing head is positionally self-adjusting in relation to the surface. The apparatus is inexpensive in relation to radiation pyrometers and is not subject to emissivity errors. The cooling effect of the airflow on the surface is very slight and in the second of the two modes of operation described above, there is no cooling effect and no error will arise by reason of differences in surface heat transfer coefficient. The air temperature measured in the duct approaches that of the surface and it has been found that there is a linear relationship between the surface temperature and the measured rise in temperature of the air.

## Claims

1. Surface-temperature sensing apparatus comprising a sensing head having a surface to face the surface whose temperature is to be measured, means for supporting the sensing head to maintain the said surface thereof a uniform distance away from the surface whose temperature is to be sensed, the sensing head having a port opening to the said face thereof a flow passage or series of flow passages opening to said face and encircling said port, means for producing a pressure difference between said passage or passages and the port, and means for measuring the temperature of air flowing through the port in consequence of said pressure difference.

2. Apparatus as claimed in claim 1, wherein means for producing an air cushion constitutes the means for supporting the sensing head.

3. Apparatus as claimed in claim 1 wherein air at a predetermined pressure is fed to the sensor head and flows out through the flow passage or passages encircling said port, thereby to produce said pressure difference.

4. Apparatus as claimed in claims 2 and 3, wherein the air flowing out through the flow passage or passages forms said air cushion between the sensing head and the surface whose temperature is to be sensed.

5. Apparatus as claimed in any one of claims 1 to 4, wherein said port opens to a vented cavity formed in the sensing head behind a partition one face of which bounds the cavity and the other face of which constitutes the said face of the sensing head.

6. Apparatus as claimed in claim 5, wherein said partition is made from a machinable ceramic material and is coated to render it non-porous.

7. Apparatus as claimed in claims 5 or 6, wherein the sensing head has a body portion made from a ceramic material, at least the surface thereof banding said cavity being coated to render it non-porous.

8. Apparatus as claimed in any one of claims 1 to 7, wherein the sensing head is mounted for universal pivotal movement relative to a support therefor.

9. Apparatus as claimed in claim 8, wherein the sensing head is connected to the support through a ball joint permitting said universal movement.

10. Apparatus as claimed in claim 8 or claim 9, wherein the support incorporates a device for yieldably loading the sensing head towards the surface whose temperature is to be sensed.

11. Apparatus as claimed in claim 10, wherein said device comprises a piston and cylinder connected between the sensing head and the support, and means for supply air under predetermined pressure to the cylinder to load the sensing head towards the surface whose temperature is to be measured.

12. Apparatus as claimed in claim 11, wherein the piston and cylinder can also be operated to retract the sensing head away from the surface whose temperature is to be measured.

13. Apparatus as claimed in claim 12, wherein in its retracted position the sensing head is disposed within a protective housing.

14. A method of sensing the surface temperature of a workpiece at an elevated temperature comprising supporting at a substantially constant distance above said surface a sensing head having a face which is maintained at a substantially constant distance from but closely adjacent said surface, and causing air to flow from a passage or series of passages centred on a post in said face to said port, and sensing the temperature of the air by means of a sensing device disposed in the air flow through said port.